# EUROPEAN PATENT SPECIFICATION

(11) **EP 2 051 951 B1**
(45) Date of publication and mention of the grant of the patent: **05.09.2012**
(21) Application number: 06835407.5
(22) Date of filing: 26.12.2006
(51) Int. Cl.: C08L 63/10, C08G 59/30, C04B 26/06, C04B 26/08, C08G 59/14, C08G 59/32

(54) **MARBLE CHIP, METHOD FOR PREPARING THE SAME AND ARTIFICIAL MARBLE USING THE SAME**
MARMORCHIP, HERSTELLUNGSVERFAHREN DAFÜR UND KUNSTMARMOR DAMIT
ÉCLAT DE MARBRE, PROCÉDÉ DE PRÉPARATION CORRESPONDANT ET MARBRE ARIFICIEL CONTENANT UN TEL ÉCLAT

(30) Priority: 24.07.2006 KR 20060069193; 24.07.2006 KR 20060069237
(43) Date of publication of application: 29.04.2009
(73) Proprietor: CHEIL INDUSTRIES INC., Gumi-si, Gyeongsangbuk-do 730-710 (KR)
(72) Inventor: SON, Chang Ho, Gyeonggi-do 437-711 (KR); CHO, Sung Woo, Jeollanam-do, 555-803 (KR)
(74) Representative: Bublak, Wolfgang
(86) International application number: PCT/KR2006/005703
(87) International publication number: WO 2008/013345

(56) References cited:
- WO-A1-2006/065042
- JP-A- 02 036 218
- JP-A- 2001 098 038
- KR-A- 20030 097 780
- KR-A- 20060 014 764
- KR-B1- 100 555 441
- KR-B1- 100 562 634
- DATABASE WPI Thomson Scientific, London, GB; AN 2000-056341 XP002663411, YOKOSHIMA MINORU; OKUBO TETSUO; SASAHARA KAZUNORI: "Resin composition - contains a brominated epoxy(meth)acrylate resin, epoxy(meth)acrylate resin and diluent", & JP JP11 209447 A (NIPPON KAYAKU KK) 3 August 1999 (1999-08-03)

## Description

### [Technical Field]

The present invention relates to marble chips, a method for preparing the same and an artificial marble using the same. More particularly, the present invention relates to marble chips formed by curing a resin composition comprising a halogenated acrylate binder and an acrylic cross-linking monomer, so that the marble chips may have good compatibility with a matrix, the same specific gravity and abrasive property as the matrix, and high specific gravity, high refractive index and high transparency. The present invention also relates to a method for preparing the marble chips, and an artificial marble using the marble chips.

### [Background Art]

Generally, artificial marble can be classified into two groups according to the base resin material: one is an acrylic artificial marble, and the other is an unsaturated polyester artificial marble. Recently, the acrylic artificial marble has become widely used as a material for various counters, tables and interior articles due to its excellent appearance, high-class texture and good weatherbility as compared with the unsaturated polyester artificial marble.

An acrylic artificial marble is typically produced by mixing a syrup of methyl methacrylate monomer and polymethylmethacrylate, an inorganic filler, and particles (which may be referred to herein as "marble chips") that provide the artificial marble with various patterns and colors, dissolving a polymerization initiator into the mixture to form a slurry, and casting the slurry at a suitable temperature.

During the preparation of the artificial marble, various artificial marble chips can be added to express various patterns and colors. Significantly, the appearance of artificial marble having the marble chips therein may greatly affect the value of the product made therewith.

The marble chips can be obtained by pulverizing a cured artificial marble into marble chips of various sizes. For the material used to prepare the marble chips, acrylic resin, the same material as a matrix of the artificial marble, has typically been used.

Recently, transparent marble chips have been used to provide an otherwise-dull artificial marble with a jewel-like appearance that gives a clear and elegant impression. In view of this development, the demand for transparent marble chips has recently been increasing.

Transparent marble chips have, until now, been prepared from polymethyl methacrylate resin or unsaturated polyester resin. However, transparent marble chips from polymethyl methacrylate resin or unsaturated polyester resin have a specific gravity of 1.15 to 1.24, which is lower than that of the matrix of the artificial marble. Due to the relatively low specific gravity, such transparent marble chips float on the upper surface of the matrix and, as a result, there are no transparent marble chips on the opposite, i.e., lower, surface of the artificial marble, and the artificial marble product does not exhibit uniform dispersion of the transparent marble chips therein. If distribution of the transparent marble chips through the matrix to the opposite surface of the artificial marble is to be achieved using the relatively low specific gravity transparent marble chips, it may require addition of more than twice the amount of transparent marble chips than would otherwise be used. This may make it difficult to control the thickness of the resulting artificial marble.

In order to increase the specific gravity of marble chips up to that of matrix, inorganic fillers such as aluminum trihydrate, barium sulfate, silica, etc., may be added to the formulation used to prepare the marble chips. However, the addition of such inorganic fillers may cause problems. For example, the transparency of the marble chips may be significantly reduced.

Engineered stone ("e-stone")-type artificial marbles, which employ natural silica such as quartz, silica sand, silica crystals, etc., or glassy silica such as glass, molten glass, etc., may have transparent chips. However, these e-stone-type artificial marbles have some disadvantages. For example, it may be unduly difficult to manufacture such e-stones using conventional continuous production methods because the transparent chips tend to sink down and sanding properties of the transparent chips are not good.

In this regard, the Morse hardness of the acryl resin being used as a matrix material for the e-stone is different from that of the material, i.e., silica or silica compound, that forms the transparent chips. As a result, the e-stone-type artificial marble does not provide good evenness and levelness.

In view of the above, it will be appreciated that transparent chips used for artificial marble should have the same specific gravity as the matrix so as not to sink down into the matrix and to provide uniform dispersion of transparent chips throughout the artificial marble, regardless of the curing time, should have an abrasive property that is the same as the matrix so that the artificial marble exhibits good evenness and levelness, and should have a high refractive index.

Accordingly, the present inventors have developed marble chips having good compatibility with a matrix, the same specific gravity and abrasive property as the matrix, and high specific gravity, high refractive index and high transparency. The marble ships may be prepared by curing a resin composition having an acrylic cross-linking monomer and a halogenated acrylate binder.

### [Disclosure]

### [Technical Problem]

An object of the present invention is to provide marble chips having a specific gravity ranging from about 1.50 to about 1.67, and a method of preparing the same.

Another object of the present invention is to provide marble chips that can provide an artificial marble with a uniform pattern, regardless of curing time or molding time, and a method of preparing the same.

Another object of the present invention is to provide marble chips having high transparency and refractive index, and a method of preparing the same.

Another object of the present invention is to provide marble chips that exhibit a similar sanding property and Morse hardness to the matrix used to form the artificial marble, and a method of preparing the same.

Another object of the present invention is to provide marble chips having good compatibility with a matrix used to form the artificial marble, and a method of preparing the same.

Another object of the present invention is to provide marble chips which can provide a three-dimensional visual effect for artificial marble, and a method of preparing the same.

Another object of the present invention is to provide marble chips having good dispersibility of a pigment and good compatibility with a matrix, so that the marble chips do not exhibit a concave phenomenon.

Another object of the present invention is to provide marble chips having good chemical resistance, and a method of preparing the same.

Another object of the present invention is to provide an artificial marble using the marble chips that may have similar appearance and texture to an engineered stone.

Another object of the present invention is to provide an artificial marble using the marble chips that can be manufactured continuously.

Another object of the present invention is to provide an artificial marble using the marble chips that exhibits good thermal processability.

Another object of the present invention is to provide an artificial marble using the marble chips that exhibits good levelness.

Other objects and advantages of this invention will be apparent from the ensuing disclosure and appended claims.

### [Technical Solution]

One aspect of the invention provides marble chips that may be formed by curing of a resin composition comprising an acrylic cross-linking monomer and a binder. The binder may be selected from the group consisting of a halogenated urethane acrylate, a halogenated epoxy acrylate, and a mixture thereof.

In some embodiments, the resin composition comprises the acrylic cross-linking monomer in an amount ranging from about 10 to about 50 parts by weight and the binder in an amount ranging about 50 to about 90 parts by weight, based on the weight of the resin composition. The resin composition may further comprise one or more additives such as a coloring agent, a curing agent, a defoaming agent, a coupling agent, an ultraviolet light absorbing agent, a light diffusing agent, a polymerization inhibitor, etc.

In some embodiments, the halogenated urethane acrylate has a number average molecular weight ranging from about 900 to about 4,000. In some embodiments, the halogenated epoxy acrylate has a number average molecular weight ranging from about 600 to about 3,500.

In some embodiments, the resin composition may further comprise a cross-linking agent selected from the group consisting of styrene monomer, halogenated styrene, vinyl toluene, diallyl terephthalate, diallyl phthalate, diallyl carbonate, divinyl benzene, α-methyl styrene, α-methyl styrene dimer, and mixtures thereof.

In some embodiments, the resin composition used to form the marble chips may itself comprise marble chips, so to provide chip-in-chip type marble chips wherein marble chips are within marble chips.

In some embodiments, the resin composition includes at least two resin compositions that may differ in color and/or transparency from one another, which may provide the marble chips with a wave pattern and/or a multi-layered structure.

Another aspect of the present invention relates to an artificial marble which contains the marble chips.

Another aspect of the invention relates to a method of preparing the marble chips. The method includes preparing a resin composition by adding an acrylic cross-linking monomer to a binder selected from the group consisting of halogenated urethane acrylate, halogenated epoxy acrylate and a mixture thereof; curing the resin composition to form a cured article; and pulverizing the cured article to form the marble chips.

In some embodiments, an amount ranging from about 0.03 to about 2.5 parts by weight of a curing agent may be added per 100 parts by weight of the resin composition to promote curing.

In some embodiments, the cured article is pulverized to a particle size ranging from about 0.1 mm to about 50 mm.

In some embodiments, the cured article is deposited with metal and then pulverized to form particles.

In some embodiments, the resin composition further comprises additives such as a coloring agent, a defoaming agent, a coupling agent, an ultraviolet light absorbing agent, a light diffusing agent, a polymerization inhibitor, etc.

In some embodiments, resin composition further comprises marble chips to provide a chip-in-chip type.

In some embodiments, the resin composition may further comprise a cross-linking agent, such as styrene monomer, halogenated styrene, vinyl toluene, diallyl terephthalate, diallyl phthalate, diallyl carbonate, divinyl benzene, α-methyl styrene, α-methyl styrene dimer, etc.

In some embodiments, the resin composition includes a plurality of resin compositions different from one another, e.g., in color and/or transparency, so that the marble chips may have a wave pattern or a multi-layered structure.

In some embodiments, the marble chips prepared by the methods described herein may have a specific gravity ranging from about 1.50 to about 1.67.

The artificial marble of the present invention contains the marble chips described herein.

### [Description of Drawings]

Fig. 1 is a photograph showing a surface pattern of artificial marble obtained in Example 5.
Fig. 2 is a photograph showing a surface pattern of artificial marble obtained in Example 6.
Fig. 3 is a photograph showing a surface pattern of artificial marble obtained in Example 9.
Fig. 4 is a photograph showing a surface pattern of artificial marble obtained in Example 10.

### [Best Mode]

The marble chips of the present invention may be formed by curing a resin composition comprising an acrylic cross-linking monomer and a binder. The binder may be selected from the group consisting of a halogenated urethane acrylate, a halogenated epoxy acrylate, and a mixture thereof.

The amount of the acrylic cross-linking monomer in the resin composition may range from about 10 to about 50 parts by weight, preferably from about 10 to about 40 parts by weight, and more preferably from about 10 to about 30 parts by weight, based on the weight of the resin composition.

The amount of the binder in the resin composition may range from about 50 to about 90 parts by weight, preferably from about 60 to about 90 parts by weight, and more preferably from about 70 to about 90 parts by weight, based on the weight of the resin composition. If the amount of the binder is less than about 50 parts by weight, the marble chips obtained therefrom may not have a high specific gravity. On the other hand, if the amount of the binder is more than about 90 parts by weight, the viscosity of the resin composition may become high and the process may be difficult to control.

The binder of the present invention is selected from the group consisting of halogenated urethane acrylate, halogenated epoxy acrylate and a mixture thereof. Among them, halogenated epoxy acrylate is most preferable.

The resin composition may further comprise a conventional additive, such as a coloring agent, a curing agent, a defoaming agent, a coupling agent, an ultraviolet light absorbing agent, a light diffusing agent, a polymerization inhibitor, an antistatic agent, a flame-retardant, a heat stabilizer, etc. Examples of the coloring agent include inorganic or organic pigment, dye, etc. The amount of the coloring agent may range from about 0.0001 to about 10.0 parts by weight, based on the weight of the resin composition.

The halogenated urethane acrylate has a number average molecular weight ranging from about 900 to about 4,000 preferably. The halogenated epoxy acrylate has a number average molecular weight ranging from about 600 to about 3,500 preferably. If the number average molecular weight is less than the above range, a cross-linking density per unit volume may become high and the marble chips may tend to be brittle. On the other hand, if the number average molecular weight is more than the above range, a cross-linking density may become low, the marble chips may tend to be soft, and it may be difficult to control the process due to high viscosity.

Examples of the acrylic cross-linking monomer include methyl (meth)acrylate, ethyl (meth)acrylate, 2-ethylhexyl (meth)acrylate, octyl (meth)acrylate, dodecyl (meth)acrylate, octadecyl (meth)acrylate, methylcyclohexyl (meth)acrylate, isobornyl (meth)acrylate, phenyl (meth)acrylate, benzyl (meth)acrylate, chlorophenyl (meth)acrylate, methoxyphenyl (meth)acrylate, bromophenyl (meth)acrylate, ethylene glycol di(meth)acrylate, 1,2-propylene glycol (meth)acrylate, 1,3-butanediol di(meth)acrylate, 1,3-propylene glycol (meth)acrylate, 1,4-butanediol di(meth)acrylate, 1,5-pentanediol di(meth)acrylate, neopentyl glycol di(meth)acrylate, diethylene glycol di(meth)acrylate, triethylene glycol di(meth)acrylate, dipropylene glycol di(meth)acrylate, trimethylolpropane tri(meth)acrylate, pentaerythritol tri(meth)acrylate, pentaerythritol tetra(meth)acrylate, dipentaerythritol hexa(meth)acrylate, ethoxy ethyl acrylate, epoxy acrylate of glycidyl methacrylic acid, 1,6-hexanediol di(meth)acrylate, glycerol tri(meth)acrylate, methylpropanediol di(meth)acrylate, polyethylene glycol di(meth)acrylate, etc., and mixtures thereof.

In some embodiments, the resin composition may further comprise a cross-linking agent selected from the group consisting of styrene monomer, halogenated styrene, vinyl toluene, diallyl terephthalate, diallyl phthalate, diallyl carbonate, divinyl benzene, α-methyl styrene, α-methyl styrene dimer and mixtures thereof.

In some embodiments, the resin composition of the present invention may further comprise marble chips so as to form marble chips having marble chips therein. That is, by adding the marble chips into the resin composition, the marble chips obtained therefrom may be of a chip-in-chip type, in which at least one chip is inside another chip. For the marble chips added into the resin composition to make the chip-in-chip resin composition, the marble chips according to the present invention, conventional marble chips prepared by pulverizing conventional artificial marble, or a mixture thereof can be used.

In some embodiments, the resin composition comprises a plurality of resin compositions, which may be different in color and/or transparency from one another. By using a plurality of resin compositions having different colors and/or transparencies, the marble chips obtained therefrom may have a wave pattern or a multi-layered structure.

Another aspect of the invention relates to a method of preparing marble chips. The method includes preparing a resin composition by adding an acrylic cross-linking monomer to a binder, which is selected from the group consisting of halogenated urethane acrylate, halogenated epoxy acrylate and a mixture thereof, curing the resin composition to form a cured article, and pulverizing the cured article.

The resin composition comprises the binder and an acrylic cross-linking monomer. The resin composition may further comprise a conventional additive such as a coloring agent, a defoaming agent, a coupling agent, an ultraviolet light absorbing agent, a light diffusing agent, a polymerization inhibitor, an antistatic agent, a flame-retardant, a heat stabilizer, etc., or mixtures thereof.

In some embodiments, the curing process is conducted using a curing agent. Examples of the curing agent include benzoyl peroxide, lauroyl peroxide, bis(4-*tert*-butyl cyclohexyl)peroxydicarbonate, etc., but are not limited thereto. The amount of the curing agent may range from about 0.03 to about 2.5 parts by weight, preferably from about 0.05 to about 2.0 parts by weight, per 100 parts by weight of the resin composition. The curing process is not particularly limited. For example, the resin composition may be cured at a temperature ranging from about 50°C to about 180 °C. In some embodiments, a cure controlling agent may be used. For the cure controlling agent, an amine compound, a sulfonic acid compound, or a metallic soap salt can be used. Examples of the metallic soap salt include a soap salt of copper, cobalt, potassium, calcium, zirconium, zinc.

In some embodiments, the cured article is pulverized to an average particle size ranging from about 0.1 mm to about 50 mm. The pulverizing process may be conducted using any suitable method known in the art.

In some embodiments, the cured article is deposited with a metal, for example, aluminum or silver, and then pulverized to particle. The marble chip obtained therefrom may provide a three-dimensional visual effect similar to a jewel, so that the artificial marble which contains the metal-deposited marble chips may resemble a marble beset with gems.

In some embodiments, the resin composition further comprises marble chips. The marble chips may be transparent, translucent, opaque or mixtures thereof. As for the marble chips added into the resin composition, marble chips of the present invention, conventional acrylic or unsaturated polyester marble chips, or a mixture thereof, can be used. By adding the marble chips into the resin composition, the marble chips obtained therefrom may be a chip-in-chip type, in which at least one chip is inside another chip. These chip-in-chip type marble chips may provide an artificial marble with various patterns.

In some embodiments, the resin composition may further comprise a cross-linking agent such as styrene monomer, halogenated styrene, vinyl toluene, diallyl terephthalate, diallyl phthalate, diallyl carbonate, divinyl benzene, α-methyl styrene, α-methyl styrene dimer, etc.

In some embodiments, the resin composition may include a plurality of resin compositions different from one another, e.g., in color and/or transparency, so that the marble chips having high specific gravity may have a wave pattern or a multi-layered structure. For example, two or more resin compositions different in color and/or transparency from one another are prepared. Then, the resin compositions are fed onto a conveyer belt simultaneously to form a cured article having a wave pattern. The cured article is pulverized to form marble chips having a wave pattern. For the two or more resin compositions, a transparent resin composition and an opaque resin composition can be used.

The marble chip of the present invention may have a specific gravity ranging from about 1.50 to about 1.67, preferably about 1.57 to about 1.64.

The artificial marble of the present invention contains the marble chips described herein.

The artificial marble is prepared by mixing marble chips, prepared as described herein, and a resin syrup to obtain a curable composition, and curing the curable composition by a conventional method. The resin syrup may be an acrylic resin or unsaturated polyester, preferably an acrylic resin. The curable composition may further comprise an inorganic filler such as calcium carbonate, aluminum hydroxide, silica, alumina, barium sulfate, magnesium hydroxide, etc., or other conventional additives. The ratio or method of adding inorganic filler or additives is not particularly limited, and may be carried out by any conventional or convenient means that is well known in the art.

The artificial marble of the present invention may have a homogeneous pattern regardless of curing time or molding time due to the use of the marble chips described herein, which may have a specific gravity ranging from about 1.50 to about 1.67, and can be manufactured continuously.

The artificial marble employing the marble chips of the present invention can be used for various applications such as kitchen countertops, wash bowls, dressing tables, various table surfaces, interior articles, etc., because it may have similar appearance and texture to an engineered stone, and have good moldability as well.

The artificial marble can also be pulverized to form particles that are then used to form other chip-in-chip type marble chips, which contain transparent chips inside.

The invention may be better understood by reference to the following examples, which are intended for the purpose of illustration and are not to be construed as in any way limiting the scope of the present invention, which is defined in the claims appended hereto. In the following examples, all parts and percentage are by weight unless otherwise indicated.

### [Mode for Invention]

### Examples

### Examples 1-4: Preparation of Marble Chips

### Example 1

A resin composition (100 parts by weight of which were formed from 85 parts by weight of brominated urethane acrylate, 5 parts by weight of bromostyrene and 10 parts by weight of methylmethacrylate), 0.2 parts by weight of benzoyl peroxide, based on the weight of the resin composition, and 0.5 parts by weight of bis(4-tert-butyl cyclohexyl)peroxydicarbonate, based on the weight of the resin composition, were mixed. The mixture was cured at 50 °C. The cured article was then pulverized to obtain marble chips having a specific gravity of 1.597.

### Example 2

Example 2 was conducted in the same manner as in Example 1, except that the mixture used included a resin composition (100 parts by weight of which were formed from 80 parts by weight of brominated epoxyacrylate, 5 parts by weight of styrene monomer and 15 parts by weight of methylmethacrylate), 0.01 parts by weight of Phthalocyanine Green as a coloring agent, based on the weight of the resin composition, 0.2 parts by weight of benzoyl peroxide as a curing agent, based on the weight of the resin composition, and 0.2 parts by weight of bis(4-tert-butyl cyclohexyl)peroxydicarbonate, based on the weight of the resin composition. The marble chips obtained therefrom had a specific gravity of 1.595 and exhibited a green color.

### Example 3

Example 3 was conducted in the same manner as in Example 1, except that the mixture used included a resin composition (100 parts by weight of which were formed from 85 parts by weight of brominated epoxyacrylate, 5 parts by weight of styrene monomer and 10 parts by weight of methylmethacrylate), 0.2 parts by weight of benzoyl peroxide, based on the weight of the resin composition, and 0.2 parts by weight of bis(4-tert-butyl cyclohexyl)peroxydicarbonate, based on the weight of the resin composition. The marble chips obtained therefrom had a specific gravity of 1.624.

### Example 4

Example 4 was conducted in the same manner as in Example 1, except that the mixture used included a resin composition (100 parts by weight of which were formed from 85 parts by weight of brominated epoxyacrylate and 15 parts by weight of methylmethacrylate), 0.2 parts by weight of benzoyl peroxide, based on the weight of the resin composition, and 0.5 parts by weight of bis(4-tert-butyl cyclohexyl)peroxydicarbonate, based on the weight of the resin composition. The marble chips obtained therefrom had a specific gravity of 1.618.

### Comparative Example 1

Comparative Example 1 was conducted in the same manner as in Example 1, except that the mixture used included a resin composition (100 parts by weight of which was formed from 90 parts by weight of brominated urethane acrylate and 10 parts by weight of styrene monomer), 0.2 parts by weight of benzoyl peroxide, based on the weight of the resin composition, and 0.5 parts by weight of bis(4-*tert*-butyl cyclohexyl)peroxydicarbonate, based on the weight of the resin composition. The marble chips obtained therefrom had a specific gravity of 1.601.

### Comparative Example 2

Comparative Example 2 was conducted in the same manner as in Example 1, except that the mixture used included a resin composition (100 parts by weight of which was formed from 80 parts by weight of brominated epoxyacrylate and 20 parts by weight of styrene monomer), 0.2 parts by weight of benzoyl peroxide, based on the weight of the resin composition, and 0.5 parts by weight of bis(4-tert-butyl cyclohexyl)peroxydicarbonate, based on the weight of the resin composition. The marble chips obtained therefrom had a specific gravity of 1.583.

### Comparative Example 3

Comparative Example 3 was conducted in the same manner as in Example 1, except that the mixture used included a syrup (100 parts by weight of which was formed of polymethylmethacrylate and methylmethacrylate monomer), 2 parts by weight of trimethyl propane triacrylate, based on the weight of the syrup, 0.1 part by weight of n-dodecyl mercaptan, based on the weight of the syrup, and 1.0 part by weight of benzoyl peroxide, based on the weight of the syrup. The marble chips obtained therefrom had a specific gravity of 1.183.

### Comparative Example 4

Comparative Example 4 was conducted in the same manner as in Example 1, except that the mixture used included 100 parts by weight of an unsaturated polyester resin (manufactured by Aekyung Chemical Co., TP-145X) and 1.0 part by weight of benzoyl peroxide. The marble chips obtained therefrom had a specific gravity of 1.203.

### Comparative Example 5

Comparative Example 5 was conducted in the same manner as in Example 1, except that the mixture used included 100 parts by weight of a vinyl ester resin (manufactured by Aekyung Chemical Co., DION-9120; the vinyl ester resin consisted of 60 parts by weight of epoxyacrylate oligomer and 40 parts by weight of styrene monomer) and 1.0 part by weight of benzoyl peroxide. The marble chips obtained therefrom had a specific gravity of 1.194.

### Examples 5-8: Preparation of Artificial Marble

### Example 5

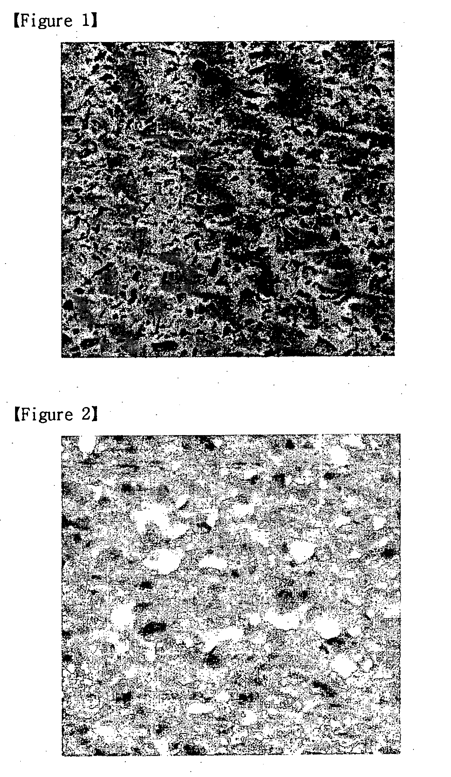

50 parts by weight of marble chips obtained from Example 1 were added to an artificial marble composition, which was prepared by mixing 100 parts by weight of syrup (consisting of polymethylmethacrylate and methylmethacrylate monomer), 180 parts by weight of aluminum hydroxide, 2 parts by weight of trimethylpropane triacrylate, 0.1 part by weight of *n*-dodecyl mercaptan, 0.1 part by weight of defoaming agent, 0.1 part by weight of dispersing agent, and 1.0 part by weight of benzoyl peroxide, to form a curable composition. The curable composition was stirred sufficiently and cured at 60 °C by means of a continuous molding process to obtain an artificial marble. A photograph of the resulting artificial marble is shown in Figure 1.

### Example 6

Example 6 was conducted in the same manner as in Example 5, except that colored transparent marble chips prepared from Example 2 were used. A photograph of the resulting artificial marble is shown in Figure 2.

### Example 7

Example 7 was conducted in the same manner as in Example 5, except that marble chips prepared from Example 3 were used.

### Example 8

Example 8 was conducted in the same manner as in Example 5, except that marble chips prepared from Example 4 were used.

### Comparative Example 6

Comparative Example 6 was conducted in the same manner as in Example 5, except that marble chips prepared from Comparative Example 1 were used.

### Comparative Example 7

Comparative Example 7 was conducted in the same manner as in Example 5, except that marble chips prepared from Comparative Example 2 were used.

### Comparative Example 8

Comparative Example 8 was conducted in the same manner as in Example 5, except that marble chips prepared from Comparative Example 3 were used.

### Comparative Example 9

Comparative Example 9 was conducted in the same manner as in Example 5, except that marble chips prepared from Comparative Example 4 were used.

### Comparative Example 10

Comparative Example 10 was conducted in the same manner as in Example 5, except that marble chips prepared from Comparative Example 5 were used.

The physical properties of the artificial marble of Examples 5-8 and Comparative Examples 6-10 are shown in Table 1 below:

**[Table 1]**

| | | Marble Chips | | | Levelness | Sanding property | Concavity | Dispersion of chips on surface of the artificial marble | Thermal processability |
|---|---|---|---|---|---|---|---|---|---|
| | | Chemical resistance test | Specific gravity | Refractive index | | | | | |
| Example | 5 | Good | 1.597 | 1.579 | Good | Good | None | Good | 150R Good |
| | 6 | Good | 1.595 | 1.571 | Good | Good | None | Good | 150R Good |
| | 7 | Good | 1.624 | 1.581 | Good | Good | None | Good | 150R Good |
| | 8 | Good | 1.618 | 1.598 | Good | Good | None | Good | 150R Good |
| Comparative Example | 6 | Good | 1.601 | 1.603 | Good | Cracked chips | Some | Good | 250R Good |
| | 7 | Good | 1.583 | 1.591 | Good | Cracked chips | None | Good | 250R Good |
| | 8 | Good | 1.183 | 1.490 | Good | Good | None | Poor | 100R Good |
| | 9 | Poor | 1.203 | 1,531 | Good | Good | Some | Poor | 300R Good |
| | 10 | Good | 1.194 | 1,542 | Good | Good | None | Poor | 250R Good |

The physical properties were measured as follows:
(1) Chemical Resistance: The surfaces of marble chips were evaluated after dipping into 1.0 N of hydrochloric acid and 1.0 N of aqueous ammonia solution at 25°C for 48 hours.
(2) Refractive Index: The refractive index was measured using an ABBE refractometer (3T) at 25 °C.
(3) Levelness: After sanding the surface of the artificial marble, the levelness of interface between the marble chips and the matrix was evaluated visually.
(4) Sanding Property: After sanding the surface of the artificial marble with sandpaper, the appearances of the marble chips were evaluated visually.
(5) Concavity: Concavity was evaluated visually as to whether or not cracks between the marble chips and the matrix, or sinking of the marble chips, occurred.
(6) Thermal Processability: Artificial marble was subjected to heating at 180 °C for 20 minutes, followed by curve cutting. Thermal processability was evaluated by measuring the minimum radius where cracks or protrusion of marble chips did not occur.

As shown in Table 1, Examples 5-8 showed good physical properties, especially good thermal processability at a radius of 150 mm. In Comparative Examples 6 and 7, although the marble chips had high specific gravity, the marble chips were cracked during the sanding property test, and the thermal processability was reduced. In Comparative Example 8, although thermal processability was good, the dispersion of marble chips on the surface of the artificial marble was poor. Further, the refractive index of the marble chips of Comparative Example 8 was too low to express similar texture to quartz, so that the artificial marble did not exhibit an appearance similar to that of an engineered stone. In Comparative Example 9, the dispersion of transparent chips on the surface of the artificial marble, thermal processability and chemical resistance were reduced, and concavities occurred. In Comparative Example 10, the dispersion of transparent chips on the surface of the artificial marble was not uniform, so that it was not possible to produce continuously.

### Example 9: Preparation of artificial marble containing marble chips of a chip-in-chip type

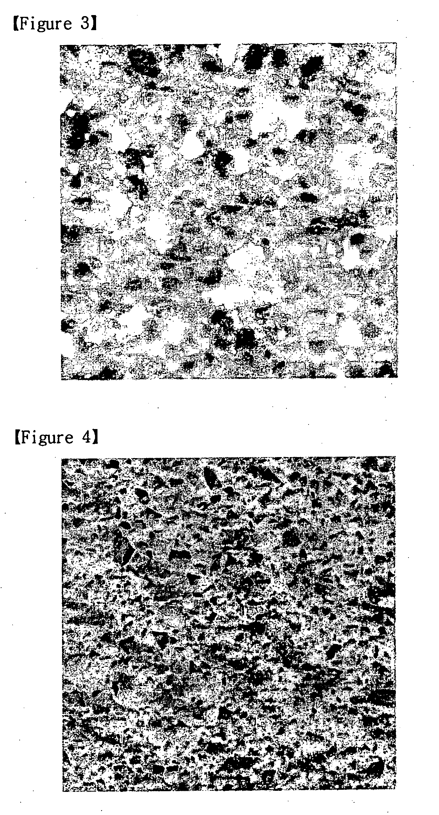

10 parts by weight of marble chips, prepared by pulverizing an acrylic artificial marble to a size of 0.01 mm to 5 mm, were added to the resin composition of Example 2, followed by curing. The cured article was pulverized to obtain marble chips. The resultant marble chips were of a chip-in-chip type, wherein colored chips were inside other marble chips. These chip-in-chip type chips were used to form an a artificial marble, which was prepared in the same manner as in Example 5 except that the above chip-in-chip type marble chips were used. A photograph of the artificial marble is shown in Figure 3.

### Example 10: Preparation of artificial marble containing marble chips having a wave pattern

Resin composition (a) and resin composition (b) were prepared by following methods, respectively. Resin composition (a) was prepared by adding 0.1 part by weight of carbon black as a coloring agent to the resin composition of Example 1. Resin composition (b) was prepared by adding 0.1 part by weight of iron oxide red as a coloring agent to the resin composition of Example 1. The resin compositions (a) and (b) were fed onto a conveyer belt simultaneously and in the same amount, and cured to obtain a cured article having a wave pattern. The cured article was pulverized to a size ranging from 0.1 mm to 30 mm to obtain marble chips having a wave pattern. An artificial marble was prepared in the same manner as in Example 5, except that the above marble chips having a wave pattern were used. A photograph of the artificial marble is shown in Figure 4.

The present invention may be easily carried out by a person of ordinary skill in the art. Any modifications and changes may be deemed to be within the scope of the present invention as defined in the following claims.

## Claims

1. A marble chip formed by curing of a resin composition comprising an acrylic cross-linking monomer and a binder selected from the group consisting of a halogenated urethane acrylate, a halogenated epoxy acrylate, and a mixture thereof.

2. The marble chip of claim 1, wherein said resin composition comprises the binder in an amount ranging from about 50 to about 90 parts by weight and the acrylic cross-linking monomer in an amount ranging from about 10 to about 50 parts by weight.

3. The marble chip of claim 1, further comprising an additive selected from the group consisting of a coloring agent, a curing agent, a defoaming agent, a coupling agent, an ultraviolet light absorbing agent, a light diffusing agent, a polymerization inhibitor, an antistatic agent, a flame-retardant, a heat stabilizer, and mixtures thereof.

4. The marble chip of claim 1, wherein said halogenated urethane acrylate has a number average molecular weight ranging from about 900 to about 4,000, and said halogenated epoxy acrylate has a number average molecular weight ranging from about 600 to about 3,500.

5. The marble chip of claim 1, wherein said acrylic cross-linking monomer is selected from the group consisting of methyl (meth)acrylate, ethyl (meth)acrylate, 2-ethylhexyl (meth)acrylate, octyl (meth)acrylate, dodecyl (meth)acrylate, octadecyl (meth)acrylate, methylcyclohexyl (meth)acrylate, isobornyl (meth)acrylate, phenyl (meth)acrylate, benzyl (meth)acrylate, chlorophenyl (meth)acrylate, methoxyphenyl (meth)acrylate, bromophenyl (meth)acrylate, ethylene glycol di(meth)acrylate, 1,2-propylene glycol (meth)acrylate, 1,3-butanediol di(meth)acrylate, 1,3-propylene glycol (meth)acrylate, 1,4-butanediol di(meth)acrylate, 1,5-pentanediol di(meth)acrylate, neopentyl glycol di(meth)acrylate, diethylene glycol di(meth)acrylate, triethylene glycol di(meth)acrylate, dipropylene glycol di(meth)acrylate, trimethylolpropane tri(meth)acrylate, pentaerythritol tri(meth)acrylate, pentaerythritol tetra(meth)acrylate, dipentaerythritol hexa(meth)acrylate, ethoxyethyl acrylate, epoxy acrylate of glycidyl methacrylic acid, 1,6-hexanediol di(meth)acrylate, glycerol tri(meth)acrylate, methylpropanediol di(meth)acrylate, polyethylene glycol di(meth)acrylate, and mixtures thereof.

6. The marble chip of claim 1, further comprising a cross-linking agent selected from the group consisting of styrene monomer, halogenated styrene, vinyl toluene, diallyl terephthalate, diallyl phthalate, diallyl carbonate, divinyl benzene, α-methyl styrene, α-methyl styrene dimer, and mixtures thereof.

7. The marble chip of claim 1, wherein said resin composition further comprises a marble chip.

8. The marble chip of claim 1, wherein said resin composition includes at least two resin compositions different in color or transparency from one another.

9. An artificial marble containing the marble chip as claimed in any one of Claims 1 to 8.

10. A method for preparing a marble chip, comprising:
preparing a resin composition by adding an acrylic cross-linking monomer to a binder selected from the group consisting of halogenated urethane acrylate, halogenated epoxy acrylate, and a mixture thereof;
curing the resin composition to form a cured article; and
pulverizing the cured article.

11. The method of Claim 10, wherein about 0.03 to about 2.5 parts by weight of a curing agent per 100 parts by weight of the resin composition is added for said curing.

12. The method of Claim 10, wherein said cured article is pulverized to a particle size ranging from about 0.1 mm to about 50 mm.

13. The method of Claim 10, wherein said cured article is deposited with a metal and then pulverized to form particles.

14. The method of Claim 10, wherein said resin composition further comprises an additive selected from the group consisting of a coloring agent, a defoaming agent, a coupling agent, an ultraviolet light absorbing agent, a light diffusing agent, a polymerization inhibitor, an antistatic agent, a flame-retardant, a heat stabilizer, and mixtures thereof.

15. The method of Claim 10, wherein said resin composition further comprises a marble chip.

16. The method of Claim 15, wherein said marble chip is a marble chip of claim 1, an acrylic- or unsaturated ester-based marble chip, or a mixture thereof.

17. The method of claim 10, wherein said resin composition further comprises a cross-linking agent selected from the group consisting of styrene monomer, halogenated styrene, vinyl toluene, diallyl terephthalate, diallyl phthalate, diallyl carbonate, divinyl benzene, α-meth^{y}ₗ styrene, α-methyl styrene dimer, and mixtures thereof.

18. The method of Claim 10, wherein said resin composition includes at least two resin compositions different in color or transparency from one another.

19. The method of Claim 18, including preparing the at least two resin compositions different in color or transparency from one another, feeding the resin compositions onto a conveyer belt simultaneously, and curing the resin compositions.

20. A marble chip prepared by any one of Claims 10 to 19, having a specific gravity of from about 1.50 to about 1.67.

21. An artificial marble containing the marble chip of Claim 20.

## Patentansprüche

1. Marmorchip, gebildet durch Aushärten einer Harzzusammensetzung, umfassend ein Acryl-Vemetzungsmonomer und ein Bindemittel, ausgewählt aus der Gruppe, bestehend aus einem halogenierten Urethanacrylat, einem halogenierten Epoxyacrylat und einem Gemisch davon.

2. Marmorchip nach Anspruch 1, wobei die Harzzusammensetzung das Bindemittel in einer Menge im Bereich von etwa 50 bis etwa 90 Gewichtsteilen und das Acryl-Vemetzungsmonomer in einer Menge im Bereich von etwa 10 bis etwa 50 Gewichtsteilen umfasst.

3. Marmorchip nach Anspruch 1, des Weiteren umfassend einen Zusatz, ausgewählt aus der gruppe, bestehend aus einem Farbmittel, einem Aushärtungsmittel, einem Entschäumungsmittel, einem Kupplungsmittel, einem Ultraviolettlicht absorbierenden Mittel, einem Lichtstreuungsmittel, einem Polymerisationshemmer, einem Antistatikmittel, einem Flammschutzmittel, einem Wärmestabilisator und Gemischen davon.

4. Marmorchip nach Anspruch 1, wobei das halogenierte Urethanacrylat ein Zahlenmittel des Molekulargewichts im Bereich von etwa 900 bis etwa 4.000 aufweist und das halogenierte Epoxyacrylat ein Zahlenmittel des Molekulargewichts im Bereich von etwa 600 bis etwa 3.500 aufweist.

5. Marmorchip nach Anspruch 1, wobei das Acryl-Vemetzungsmonomer ausgewählt ist aus der gruppe, bestehend aus Methyl(meth)acrylat, Ethyl(meth)acrylat, 2-Ethylhexyl(meth)acrylat, Octyl(meth)acrylat, Dodecyl(meth)acrylat, Octadecyl(meth)acrylat, Methylcyclohexyl(meth)acrylat, Isobornyl(meth)acrylat, Phenyl(meth)acrylat, Benzyl(meth)acrylat, Chlorphenyl(meth)acrylat, Methoxyphenyl(meth)acrylat, Bromphenyl(meth)acrylat, Ethylenglycoldi(meth)acrylat, 1,2-Propylenglycol(meth)acrylat, 1,3-Butandioldi(meth)acrylat, 1,3-Propylenglycol(meth)acrylat, 1,4-Butandioldi(meth)acrylat, 1,5-Pentandioldi(meth)acrylat, Neopentylglycoldi(meth)acrylat, Diethylenglycoldi(meth)acrylat, Triethylenglycoldi(meth)acrylat, Dipropylenglycoldi(meth)acrylat, Trimethylolpropantri(meth)acrylat, Pentaerythritoltri(meth)acrylat, Pentaerythritoltetra(meth)acrylat, Dipentaerythritolhexa(meth)acrylat, Ethoxyethylacrylat, Epoxyacrylat von Glycidylmethacrylsäure, 1,6-Hexandioldi(meth)acrylat, Glycerintri(meth)acrylat, Methylpropandioldi(meth)acrylat, Polyethylenglycoldi(meth)acrylat und Gemischen davon.

6. Marmorchip nach Anspruch 1, des Weiteren umfassend ein Vernetzungsmittel, ausgewählt aus der Gruppe, bestehend aus Styrolmonomer, halogeniertem Styrol, Vinyltoluol, Diallylterephthalat, Diallylphthalat, Diallylcarbonat, Divinylbenzol, α-Methylstyrol, α-Methylstyroldimer und Gemischen davon.

7. Marmorchip nach Anspruch 1, wobei die Harzzusammensetzung des Weiteren einen Marmorchip umfasst.

8. Marmorchip nach Anspruch 1, wobei die Harzzusammensetzung mindestens zwei Harzzusammensetzungen einschließt, die sich in Farbe oder Transparenz voneinander unterscheiden.

9. Kunstmarmor, enthaltend den Marmorchip nach einem der Ansprüche 1 bis 8.

10. Verfahren zur Herstellung eines Marmorchips, umfassend:
Herstellen einer Harzzusammensetzung durch Zugabe eines Acryl-Vemetzungsmonomers zu einem Bindemittel, ausgewählt aus der Gruppe, bestehend aus halogeniertem Urethanacrylat, halogeniertem Epoxyacrylat und einem Gemisch davon;
Aushärten der Harzzusammensetzung unter Bildung eines ausgehärteten Gegenstands; und
Pulverisieren des ausgehärteten Gegenstands.

11. Verfahren nach Anspruch 10, wobei etwa 0,03 bis etwa 2,5 Gewichtsteile eines Aushärtungsmittels pro 100 Gewichtsteile der Harzzusammensetzung zum Aushärten zugesetzt werden.

12. Verfahren nach Anspruch 10, wobei der ausgehärtete Gegenstand zu einer Teilchengröße im Bereich von etwa 0,1 mm bis etwa 50 mm pulverisiert wird.

13. Verfahren nach Anspruch 10, wobei auf dem ausgehärteten Gegenstand ein Metall abgeschieden wird und er dann unter Bildung von Teilchen pulverisiert wird.

14. Verfahren nach Anspruch 10, wobei die Harzzusammensetzung des Weiteren einen Zusatz, ausgewählt aus der Gruppe, bestehend aus einem Farbmittel, einem Entschäumungsmittel, einem Kupplungsmittel, einem Ultraviolettlicht absorbierenden Mittel, einem Lichtstreuungsmittel, einem Polymerisationshemmer, einem Antistatikmittel, einem Flammschutzmittel, einem Wärmestabilisator und Gemischen davon, umfasst.

15. Verfahren nach Anspruch 10, wobei die Harzzusammensetzung des Weiteren einen Marmorchip umfasst.

16. Verfahren nach Anspruch 15, wobei der Marmorchip ein Marmorchip nach Anspruch 1, ein Marmorchip auf Acrylbasis oder der Basis eines ungesättigten Esters oder ein Gemisch davon umfasst.

17. Verfahren nach Anspruch 10, wobei die Harzzusammensetzung des Weiteren ein Vernetzungsmittel, ausgewählt aus der Gruppe, bestehend aus Styrolmonomer, halogeniertem Styrol, Vinyltoluol, Diallylterephthalat, Diallylphthalat, Diallylcarbonat, Divinylbenzol, α-Methylstyrol, α-Methylstyroldimer und Gemischen davon, umfasst.

18. Verfahren nach Anspruch 10, wobei die Harzzusammensetzung mindestens zwei Harzzusammensetzungen einschließt, die sich in Farbe oder Transparenz voneinander unterscheiden.

19. Verfahren nach Anspruch 18, einschließend das Herstellen der mindestens zwei Harzzusammensetzungen, die sich in Farbe oder Transparenz voneinander unterscheiden, gleichzeitiges Zuführen der Harzzusammensetzungen auf einem Förderband und Aushärten der Harzzusammensetzungen.

20. Marmorchip, hergestellt durch einen der Ansprüche 10 bis 19 mit einer spezifischen Dichte von etwa 1,50 bis etwa 1,67.

21. Künstlicher Marmor, enthaltend den Marmorchip nach Anspruch 20.

## Revendications

1. Éclat de marbre formé par durcissement d'une composition de résine comprenant un monomère de réticulation acrylique et un liant choisi dans le groupe constitué par un acrylate d'uréthane halogéné, un acrylate d'époxyde halogéné, et un mélange de ceux-ci.

2. Éclat de marbre selon la revendication 1, dans lequel ladite composition de résine comprend le liant en une quantité comprise dans la plage allant d'environ 50 à environ 90 parties en masse et le monomère de réticulation acrylique en une quantité comprise dans la plage allant d'environ 10 à environ 50 parties en masse.

3. Éclat de marbre selon la revendication 1, comprenant en outre un additif choisi dans le groupe constitué par un agent colorant, un agent durcissant, un agent anti-mousse, un agent de couplage, un agent absorbant la lumière ultraviolette, un agent de diffusion de lumière, un inhibiteur de polymérisation, un agent antistatique, un ignifuge, un stabilisant thermique, et des mélanges de ceux-ci.

4. Éclat de marbre selon la revendication 1, dans lequel ledit acrylate d'uréthane halogéné a une masse moléculaire moyenne en nombre comprise dans la plage allant d'environ 900 à environ 4000, et ledit acrylate d'époxyde halogéné a une masse moléculaire moyenne en nombre comprise dans la plage allant d'environ 600 à environ 3500.

5. Éclat de marbre selon la revendication 1, dans lequel ledit monomère de réticulation acrylique est choisi dans le groupe constitué par le (méth)acrylate de méthyle, le (méth)acrylate d'éthyle, le (méth)acrylate de 2-éthylhexyle, le (méth)acrylate d'octyle, le (méth)acrylate de dodécyle, le (méth)acrylate d'octadécyle, le (méth)acrylate de méthylcyclohexyle, le (méth)acrylate d'isobornyle, le (méth)acrylate de phényle, le (méth)acrylate de benzyle, le (méth)acrylate de chlorophényle, le (méth)acrylate de méthoxyphényle, le (méth)acrylate de bromophényle, le di(méth)acrylate d'éthylène glycol, le (méth)acrylate de 1,2-propylène glycol, le di(méth)acrylate de 1,3-butanediol, le (méth)acrylate de 1,3-propylène glycol, le di(méth)acrylate de 1,4-butanediol, le di(méth)acrylate de 1,5-pentanediol, le di(méth)acrylate de néopentylglycol, le di(méth)acrylate de diéthylène glycol, le di(méth)acrylate de triéthylène glycol, le di(méth)acrylate de dipropylène glycol, le tri(méth)acrylate de triméthylolpropane, le tri(méth)acrylate de pentaérythritol, le tétra(méth)acrylate de pentaérythritol, l'hexa(méth)acrylate de dipentaérythritol, l'acrylate d'éthoxyéthyle, l'acrylate d'époxyde d'acide glycidylméthacrylique, le di(méth)acrylate de 1,6-hexanediol, le tri(méth)acrylate de glycérol, le di(méth)acrylate de méthylpropanediol, le di(méth)acrylate de polyéthylène glycol, et des mélanges de ceux-ci.

6. Éclat de marbre selon la revendication 1, comprenant en outre un agent de réticulation choisi dans le groupe constitué par un monomère de styrène, un styrène halogéné, un vinyltoluène, un téréphtalate de diallyle, un phtalate de diallyle, un carbonate de diallyle, un divinylbenzène, un α-méthylstyrène, un dimère d'α-méthylstyrène, et des mélanges de ceux-ci.

7. Éclat de marbre selon la revendication 1, dans lequel ladite composition de résine comprend en outre un éclat de marbre.

8. Éclat de marbre selon la revendication 1, dans lequel ladite composition de résine comprend au moins deux compositions de résine différentes l'une de l'autre en termes de couleur ou de transparence.

9. Marbre artificiel contenant l'éclat de marbre selon l'une quelconque des revendications 1 à 8.

10. Procédé de préparation d'un éclat de marbre, comprenant :
la préparation d'une composition de résine par l'ajout d'un monomère de réticulation acrylique à un liant choisi dans le groupe constitué par un acrylate d'uréthane halogéné, un acrylate d'époxyde halogéné, et un mélange de ceux-ci ;
le durcissement de la composition de résine pour former un article durci ; et
la pulvérisation de l'article durci.

11. Procédé selon la revendication 10, dans lequel environ 0,03 à environ 2,5 parties en masse d'un agent durcissant pour 100 parties en masse de la composition de résine sont ajoutées pour ledit durcissement.

12. Procédé selon la revendication 10, dans lequel ledit article durci est pulvérisé à une taille de particules comprise dans la plage allant d'environ 0,1 mm à environ 50 mm.

13. Procédé selon la revendication 10, dans lequel ledit article durci est déposé avec un métal, puis pulvérisé pour former des particules.

14. Procédé selon la revendication 10, dans lequel ladite composition de résine comprend en outre un additif choisi dans le groupe constitué par un agent colorant, un agent anti-mousse, un agent de couplage, un agent absorbant la lumière ultraviolette, un agent de diffusion de lumière, un inhibiteur de polymérisation, un agent antistatique, un ignifuge, un stabilisant thermique, et des mélanges de ceux-ci.

15. Procédé selon la revendication 10, dans lequel ladite composition de résine comprend en outre un éclat de marbre.

16. Procédé selon la revendication 15, dans lequel ledit éclat de marbre est un éclat de marbre selon la revendication 1, un éclat de marbre à base d'un ester acrylique ou insaturé, ou un mélange de ceux-ci.

17. Procédé selon la revendication 10, dans lequel ladite composition de résine comprend en outre un agent de réticulation choisi dans le groupe constitué par un monomère de styrène, un styrène halogéné, un vinyltoluène, un téréphtalate de diallyle, un phtalate de diallyle, un carbonate de diallyle, un divinylbenzène, un α-méthylstyrène, un dimère d'α-méthylstyrène, et des mélanges de ceux-ci.

18. Procédé selon la revendication 10, dans lequel ladite composition de résine comprend au moins deux compositions de résine différentes l'une de l'autre en termes de couleur ou de transparence.

19. Procédé selon la revendication 18, comprenant la préparation d'au moins deux compositions de résine différentes l'une de l'autre en termes de couleur ou de transparence, l'approvisionnement simultané desdites compositions de résine sur un transporteur à courroie, et le durcissement des compositions de résine.

20. Éclat de marbre préparé selon l'une quelconque des revendications 10 à 19, ayant une gravité spécifique d'environ 1,50 à environ 1,67.

21. Marbre artificiel contenant l'éclat de marbre selon la revendication 20.
